## Europäisches Patentamt
## European Patent Office
## Office européen des brevets

(11) Veröffentlichungsnummer: **0 241 766**
**A2**

# (12) EUROPÄISCHE PATENTANMELDUNG

(21) Anmeldenummer: **87104279.2**

(22) Anmeldetag: **24.03.87**

(51) Int. Cl.⁴: **G01L 1/24 , G01L 11/00**

(30) Priorität: **03.04.86 DE 3611119**

(43) Veröffentlichungstag der Anmeldung:
**21.10.87 Patentblatt 87/43**

(84) Benannte Vertragsstaaten:
**AT BE CH DE FR GB IT LI NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**D-8000 München 19(DE)**

Anmelder: **CENTRE NATIONAL DE LA RECHERCHE SCIENTIFIQUE (CNRS)**
**15, Quai Anatole France**
**F-75700 Paris(FR)**

(72) Erfinder: **Kist, Rainer, Dr.**
**Am Rainhof 6**
**D-7815 Kirchzarten(DE)**
Erfinder: **Ott, Wolfgang**
**In den Mühlenmatten 29**
**D-7801 Gottenheim(DE)**
Erfinder: **Chardon, Dominique, Dr.**
**9, Rue Vulpian**
**F-75013 Paris(FR)**
Erfinder: **Huard, Serge J., Dr.**
**240, Route de Roussigny**
**F-91640 Briis sous Forge(FR)**

(74) Vertreter: **Rackette, Karl, Dipl.-Phys. Dr.-Ing**
**Kaiser-Joseph-Strasse 179 Postfach 1310**
**D-7800 Freiburg(DE)**

(54) **Sensoranordnung.**

(57) Eine Sensoranordnung mit einem faseroptischen Fabry-Perot-Interferometer verfügt über einen monomodig angeregten, mechanisch belasteten Lichtwellenleiter (4), der an seinen beiden Stirnflächen (15, 16) jeweils einen teildurchlässigen Spiegel aufweist, wobei die erste Stirnfläche (15) mit dem polarisierten Licht einer Lichtquelle (19) beaufschlagt wird und das aus der zweiten Stirnfläche (16) austretende Licht eine Lichtdetektoranordnung (18) speist, die mit einer Auswerteelektronik (39) verbunden ist. Die Einspeisung des Lichtes der Lichtquelle (19) erfolgt über eine Einrichtung (21, 22) zum Erzeugen einer zirkularen Polarisation. Der Lichtwellenleiter (4) ist nicht oder nur schwach doppelbrechend, wobei die mechanische Belastung die beiden Hauptachsenrichtungen der induzierten Doppelbrechung festlegt. Das austretende Licht wird über eine Strahlteileranordnung (25, 26) zerlegt und speist vier Detektoren (35 bis 38), deren Ausgangssignale an vier Eingänge der Auswerteelektronik (39) angeschlossen sind.

Fig. 1

## Sensoranordnung

Die Erfindung betrifft eine Sensoranordnung mit einem faseroptischen Fabry-Perot-Interferometer, das einen monomodig angeregten, mechanisch belasteten Lichtwellenleiter aufweist, der an seinen beiden Stirnflächen jeweils einen teildurchlässigen Spiegel aufweist, wobei die erste Stirnfläche mit dem polarisierten Licht einer Lichtquelle beaufschlagt wird und das aus der zweiten Stirnfläche austretende Licht eine Detektionseinrichtung speist, die mit einer Auswerteelektronik verbunden ist.

In IEEE Journal of Quantum Electronics, Vol. QE-18, No. 10, October 1982, Seite 1624, ff., sind faseroptische Fabry-Perot Interferometer und ihre Sensoranwendung sowie Sensoranordunungen der oben geschilderten Gattung erörtert. Wenn solche Sensoranordnungen eingesetzt werden, um mechanische Größen oder sonstige, in mechanische Größen umgesetzte physikalische Größen zu erfassen, ergeben sich häufig Meßfehler, da konstante Umgebungstemperaturen im allemeinen nicht gewährleistet werden können. Durch Temperaturschwankungen verändert sich nämlich die optische Länge (Produkt aus geometrischer Länge und Brechzahl) des faseroptischen Fabry-Perot Interferometers und damit die Umlaufphase.

Ausgehend von diesem Stand der Technik liegt der Erfindung die Aufgabe zugrunde, eine Sensoranordnung, insbesondere einen Kraft-und Drucksensor zu schaffen, der temperaturkompensiert ist und daher auch bei unterschiedlichen Umgebungstemperaturen genaue Meßwerte liefert.

Diese Aufgabe wird erfindungsgemäße dadurch gelöst, daß die Einspeisung des Lichtes über eine Einrichtung zum Erzeugen einer zirkularen Polarisation erfolgt, daß der Lichtwellenleiter nicht oder nur schwach doppelbrechend ist, wobei die mechanische Belastung die beiden Hauptachsenrichtungen der induzierten Doppelbrechung festlegt, und daß das austretende Licht über eine Strahlteileranordnung, die das den beiden Hauptachsenrichtungen zugeordnete polarisierte Licht entsprechend seinen beiden Komponenten zerlegt, vier Photodetektoren speist, deren Ausgangssignale an vier Eingänge der Auswerteelektronik angeschlossen sind.

Die erfindungsgemäße Anordnung gestattet es, aufgrund der Umlaufphase und der Doppelbrechung zwei Parameter zu erfassen, wobei für den Falle des Einsatzes als Kraft-und Drucksensor die Erfassung der Umgebungstemperatur dazu dient, eine Temperaturkompensation durchzuführen. Es ist aber auch möglich, die bei der Messung erfaßte Temperatur gesondert auszugeben. Andere physikalische Größen als Temperaturen, Kräfte und Drucke, lassen sich ebenfalls jeweils paarweise erfassen, wenn sie die Umlaufphase und die induzierte Doppelbrechung verschieden beeinflussen.

Bei einem zweckmäßigen Ausführungsbeispiel der Erfindung weist die Strahlteileranordnung zwei Wollaston-Prismen auf, von denen das eine mit seinen Achsen auf die Hauptachsen des Lichtwellenleiters und das andere mit seinen Achsen unter 45° auf die Hauptachsen des Lichtwellenleiters ausgerichtet ist.

Zweckmäßige Ausgestaltungen und Weiterbildungen der Erfindung sind in den Unteransprüchen gekennzeichnet.

Nachfolgend wird die Erfindung anhand der in der Zeichnung dargestellten Ausführungsfbeispiele näher erörtert. Es zeigen:

Fig. 1 ein erstes Ausführungsbeispiel einer Sensoranordnung gemäß der Erfindung in einer - schematischen Darstellung,

Fig. 2 ein zweites Ausführungsbeispiel für eine erfindungsgemäße Sensoranordnung in einer - schmatischen Darstellung,

Fig. 3 einen Längsschnitt durch den Sensorteil des Ausführungsbeispiels gemäß Fig. 2,

Fig. 4 eine Variante für eine Detektionseinrichtung der erfindungsgemäßen Sensoranordnung.

Fig. 5 eine Draufsicht auf eine Sensoranordnung mit einem bifilar gewickelten Lichtwellenleiter,

Fig. 6 eine Seitenansicht auf einen Schnitt durch das Ausführungsbeispiel gemäß Fig. 5 entlang der Linie VI-VI,

Fig. 7 eine Draufsicht auf ein Ausführungsbeispiel einer Sensoranordnung mit einem schlangenförmig verlegten Lichtwellenleiter,

Fig. 8 einen Schnitt durch die Sensoranordnung gemäß Fig. 7 in einer Seitenansicht und

Fig. 9 eine Seitenansicht auf die Sensoranordnung gemäß Fig. 7 in Richtung der Längskante des Druckstempels.

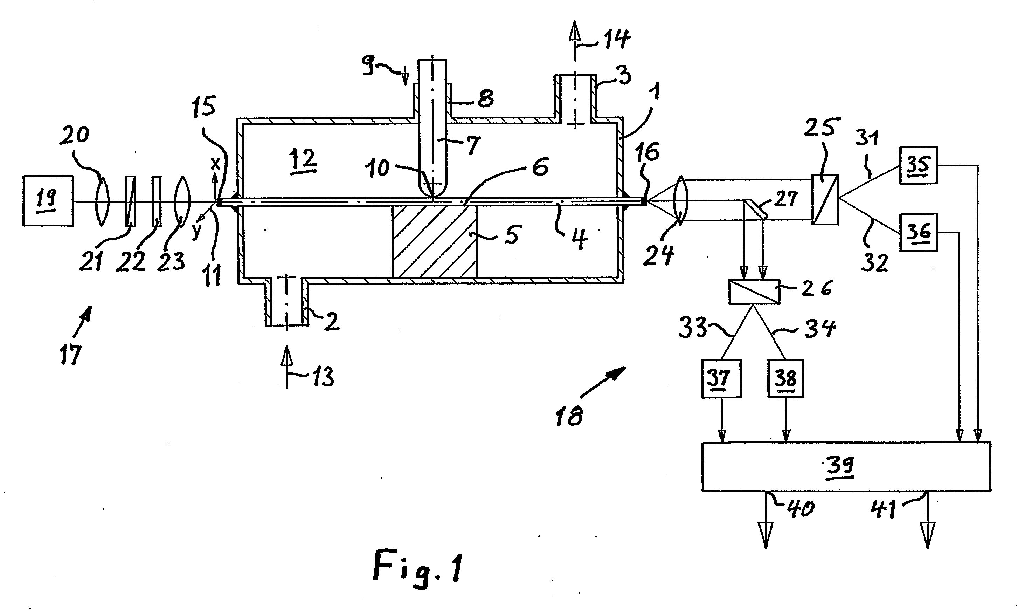

In Fig. 1 erkennt man schematisch den Aufbau einer erfindungsgemäßen Sensoranordnung, die unter anderem als temperaturkompensierter Kraft- und Drucksensor eingesetzt werden kann.

In einem Gehäuse 1, das allseitig verschlossen sein kann oder aber mit einem Einlaßstutzen 2 und einem Auslaßstutzen 3 versehen sein kann, ist ein Lichtwellenleiter 4 angeordnet, der nicht oder nur - schwach doppelbrechend ist und in dem durch die Einwirkung einer äußeren Kraft eine Doppelbrechung induziert wird. Eine solche Doppelbrechung tritt insbesondere bei einem Lichtwellenleiter 4 aus Quarzglas auf.

Wie man in Fig. 1 erkennt, ist im Gehäuse 1 ein Auflagebock 5 mit einer Auflagefläche 6 vorgesehen, auf dem wenigstens ein Teil des Lichtwellenleiters 4 ruht. Auf der der Auflagefläche 6 gegenüberliegenden Seite des Lichtwellenleiters 4 ist ein Druckstempel 7 vorgesehen, der in einer Führung 8 geführt ist, und durch den in Richtung eines Pfeiles 9 eine Kraft auf den Lichtwellenleiter 4 ausgeübt werden kann. Der Stempel 7 ist vorzugsweise schneidenartig mit einer abgerundeten, rechtwinklig zur Achse des Lichtwellenleiters verlaufenden Kante 10 aufgebaut, durch die eine lokale Einwirkung auf den Lichtwellenleiter 4 bewirkt wird. Durch die Geometrie der Anordnung sind zwei Hauptachsenrich tungen x und y festgelegt, die in Fig. 1 durch ein Koordinatensystem 11 veranschaulicht sind. Der Druckstempel 7 ist in x-Richtung in der Führung 8 im Gehäuse 1 verschierbbar. Seine Lage hängt dabei von der in Richtung des Pfeiles 9 wirkenden Kraft ab, durch die eine variable Doppelbrechung im Lichtwellenleiter 4 erzeugt wird. Die in Richtung des Pfeiles 9 wirkende Kraft kann eine unmittelbar auf den Kraftsensor einwirkende Kraft sein, beispielsweise die durch das Gewicht einer Masse einwirkende Kraft (faseroptische Waage), oder aber die aus einem auf eine vorherbestimmte Fläche wirkenden Druck abgeleitete Kraft (faseroptischer Drucksensor).

Wenn das Gehäuse 1 allseitig geschlossen ist, kann ein im Innern 12 des Gehäuses 1 vorhandenes Medium als Homogenisierungsbad wirken, das eine gleichmäßige Temperaturverteilung entlang dem Lichtwellenleiter 4 sicherstellt. Bei einem Gehäuse 1 mit einem Einlaßstutzen 2 und einem Auslaßstutzen 3 kann in Richtung des Pfeiles 13 eine ein Flüssigkeit oder ein Gas einströmen und in Richtung des Pfeiles 14 ausströmen, um auf diese Weise zusätzlich zu dem ersten über den Druckstemepl 7 einwirkenden Parameter (Kraft, Druck) einen zweiten parameter (Temperatur) auf den Lichtwellenleiter 4 einwirken zu lassen. Wie nachfolgend beschrieben werden wird, kann dann die gleichzeitige Messung zweier Parameter in einem einzigen Sensor erfolgen. Andererseits ist es auch möglich, mit dem in Fig. 1 dargestellten Sensor die in Richtung des Pfeiles 9 wirkende Kraft zu messen und die Umgebungstemperatur des Lichtwellenleiters 4 als Störgröße bei der Bestimmung de mechanischen Parameters aufzufassen, wobei die Erfassung der Störgröße dazu dient, eine Meßwertkorrektur sicherzustellen.

Der sich durch das Gehäuse 1 hindurch erstreckende Lichtwellenleiter 4 ist an seinen Stirnflächen 15 und 16 mit teildurchlässigen Spiegeln versehen, so daß er ein Faster-Fabry-Perot-Interferometer bildet, für das aufgrund der Doppelbrechung zwei den Hauptachsenrichtungen zugeordnete Umlaufphasen gelten, deren Differenz als differentielle Phase bezeichnet wird. Die den beiden Hauptachsenrichtungen zugeordneten Brechzahlen bestimmen zusammen mit der geometrischen Länge des Faser-Fabry-Perot-Interferometers die differentielle Phase, die jeweils von der entlang dem Lichtwellenleiter 4 einwirkenden Temperatur und der lokal über den Druckstempel 7 einwirkenden mechanischen Spannung abhängt. In einem besonders einfachen Fall hängt die Umlaufphase für die x-Hauptachsenrichtung allein von dem ersten Parameter und die differentielle Phase allein vom zweiten Parameter ab. Im allgemeinen sind Umlaufphase und differentielle Phase jedoch unabhängige Linearkombinationen der beiden einwirkenden Parameter, d.h. der Temperatur und der Kraft.

Dem Gehäuse 1 der Sensoranordnung ist eine in Fig. 1 links vom Gehäuse 1 dargestellte Beleuchtungseinrichtung 17 und eine in Fig. 1 rechts vom Gehäuse 1 dargestellte Detektionseinrichtung 18 zugeordnet. Die Beleuchtungseinrichtung 17 weist einen Diodenlaser 19 auf, dessen Licht über eine Kollimatorlinse 20 zu einem Parallelstrahl gebündelt wird. Der Parallelstrahl durchquert einen optischen Isolator mit einem Polarisator 21 und einer λ/4-Platte 22, so daß der Parallelstrahl in den Zustand zirkularer Polarisation gebracht wird. Der zirkular polarisierte Parallelstrahl kon stanter Wellenlänge wird mit Hilfe einer Sammellinse 23 in den Kern des Lichtwellenleiters 4 eingekoppelt. Dabei wird der Lichtwellenleiter pro orthogonaler Polarisationsrichtung monomodig angeregt.

In Abhängigkeit von der Umgebungstemperatur des Lichtwellenleiters 4 und der Verschiebung des Druckstempels 7 in Richtung auf den Auflagebock 5 wird an der Stirnfläche 16 ein Resonatorsignal erhalten, das durch eine Sammellinse 24 kollimiert wird. Das kollimierte Resonatorsignallichtbündel beaufschlagt ein erstes Wollaston-Prisma 25 und über einen Umlenkspiegel 27 ein zweites Wollaston-Prisma 26.

Die Achsen des ersten Wollaston-Prisma 25 sind unter 45° zu den Hauptachsen x und y des Lichtwellenleiters 4 des Faser-Fabry-Perot-Interferometers orientiert. Die Achsen des zweiten Wollaston-Prismas 26 sind auf die Hauptachsen des Faser-Fabry-Perot-Interferometers justiert. Entsprechend den Polarisationsrichtungen teilen die Wollaston-Prismen 25 und 26 das Resonatorsignallichtbündel jeweils paarweise in Intensitätsanteile $I_1$, $I_2$, $I_3$ und $I_4$ auf. Das Lichtbündel 31 mit der Intensität $I_1$ beaufschlagt einen ersten Photodetektor 35, das Lichtbündel 32 mit der Intensität $I_2$ einen zweiten Photodetektor 36, das das zweite Wollaston-Prisma 26 verlassende Lichtbündel 33 mit der In-

tensität $I_3$ den Photodetektor 37 und das ebenfalls das zweite Wollaston-Prisma 26 verlassende Lichtbündel 34 mit der Intensität $I_4$ den vierten Photodetektor 38.

Die Ausgänge der Photodetektoren 35, 36, 37 und 38 speisen die Meßeingänge einer Auswerteelektronik 39, die dem Quartett der Intensitäten $I_1$, $I_2$, $I_3$ und $I_4$ die zugehörige Umlaufphase und differentielle Phase und daraus das zu bestimmende Meßparameterpaar zuordnet, so daß am Haputausgant 40 ein elektrisches Signal zur Verfügung steht, das nur von der über den Druckstempel 7 einwirkenden Kraft abhängt, während am Hilfsausgang 41, dessen Signal u.U. nicht weiterverarbeitet wird, ein nur von der Temperatur des Lichtwellenleiters 4 abhängiges Signal zur Verfügung steht. Das Signal am Hauptausgang 40 ist somit ein temperaturkompeniiertes Meßsignal der über den Druckstempel 7 auf den Lichtwellenleiter 4 einwirkenden Kraft.

Die Auswerteelektronik 39 enthält entweder eine Recheneinheit, die ausgehend von der Variation der Umlaufphase und der Variation der differentiellen Phase sowie experimentell bestimmter Koeffizienten einer Matrix die beiden Parameter errechnet, oder aber einen Schreib-Lese-Speicher, der im Rahmen einer Eichprozedur für eine Vielzahl von Wertepaaren für die Umlaufphase und die differentielle Phase die zugehörigen Kraft/Temperatur-Wertepaare enthält. Nach der Durchführung einer solchen Eichung besteht die Auswertung der Auswerteelektronik darin, für die von den Photodetektoren 35, 36, 37 und 38 ermittelten vier Intensitäten jeweils das zugeordnete Signalpaar für den Hauptausgang 40 und 41 festzustellen.

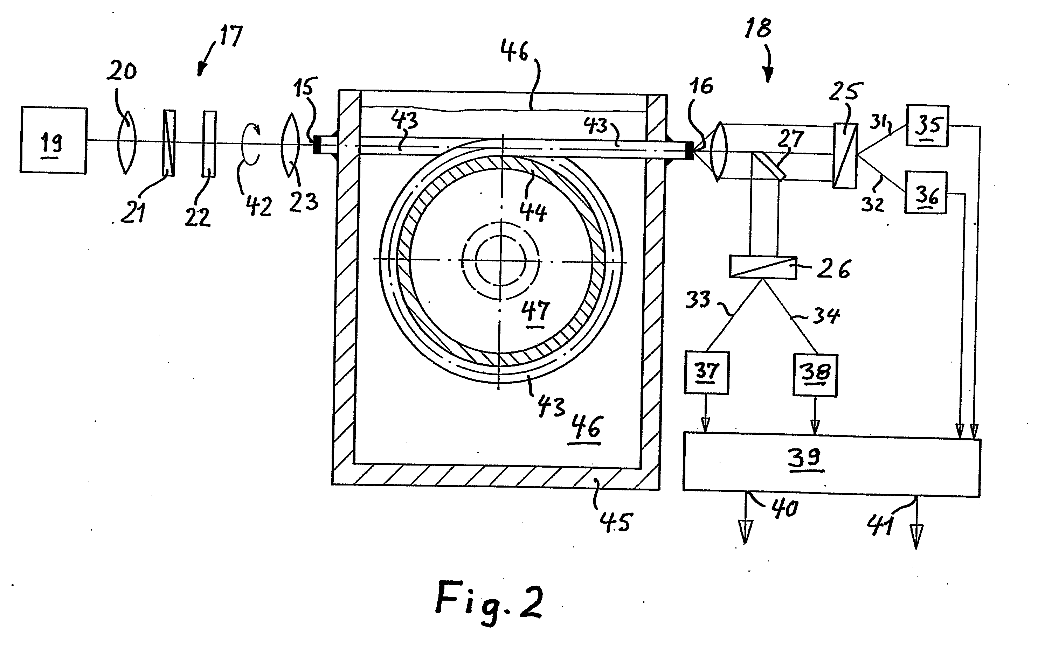

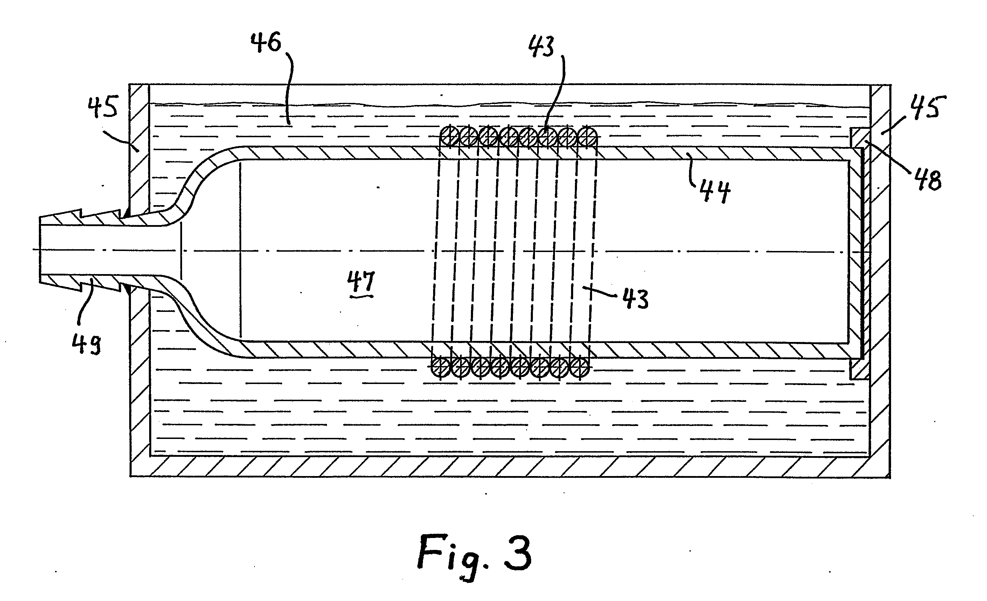

In den Figuren 2 und 3 ist ein weiteres Ausführungsbeispiel für eine erfindungsgemäße Sensoranordnung dargestellt. Bauteile, die mit der Anordnung gemäß Fig. 1 übereinstimmen, sind mit den gleichen Bezugszeichen versehen. Die Stirnfläche 15 wird wie bei dem oben erörterten Ausführungsbeispiel mit Licht einer konstanten Wellenlänge beaufschlagt, das zirkular polarisiert ist, die durch den Pfeil 42 veranschaulicht werden soll. Die Stirnfläche 16 ist mit einer Detektionseinrichtung 18 gekoppelt, die der im Zusammenhang mit Fig. 1 beschriebenen Detektionseinrichtung 18 entspricht. Statt der Einkopplung und Auskopplung über den Stirnflächen 15, 16 direkt zugeordneten Sammellinsen 23,24 ist es auch möglich, eine Einkopplung bzw. Auskopplung über in der Zeichnung nicht dargestellte polarisationserhaltende Lichtwellenleiter durchzuführen.

Das Faser-Farby-Perot-Interferometer des in den Figuren 2 und 3 dargestellten Ausführungsbeispiels weist einen Lichtwellenleiter 43 auf, der torsionsfrei auf einer elastischen Metallzylinder 44 augewickelt ist. Der in den Figuren 2 und 3 dargestellte Metallzylinder 44 ist in einem Behälter 45 angeordnet. Der Lichtwellenleiter 43 erstreckt sich, wie bei dem in Fig. 1 dargestellten Ausführungsbeispiel, durch zwei gegenüber angeordnete Wände des Behälters 45 und steht auf der Außenseite des Behälters 45 etwas über. Selbstverständlich sind die Durchführungen in den Wandungen des mit einer Flüssigkeit 46 gefüllten Behälters 45 abgedichtet. Der elastische Metallzyliner 44 ist mit einem Anschlußstutzen 49 versehen, über den ein unter Druck stehendes Medium, insbesondere ein Gas oder eine Flüssigkeit, in das Innere 47 des Metallzylinders 44 gelangen kann. Der Metallzylinder 44 ist über seinen Anschlußstutzen 49 an der in Fig. 3 linken Seite befestigt, während er an der in Fig. 3 rechten Seite mit Hilfe einer Lagerplatte 48 gehalten ist. Die Flüssigkeit 46 stellt ein Wärmebad mit einer bestimmten Temperatur dar . Die Sensoranordnung gemäß den Figuren 2 und 3 ist besonders zur Über wachung thermodynamischer Prozesse in der Prozeßmeßtechnik, insbesondere in der chemischen und pharmazeutischen Industrie, geeignet. Die in den Figuren 2 und 3 dargestellte Sensoranordnung gestattet es, einerseits den Druck im Innern 47 und andererseits die Temperatur der Flüssigkeit 46 zu messen, wobei Veränderungen der Temperatur der Flüssigkeit 46 die Genauigkeit der Messung des Druckes im Innern 47 nicht beeinflussen. Druckänderungen im Innern 47 bewirken einen Spreizdruck auf die durch den Lichtwellenleiter 43 gebildete Spule, in der in Abhängigkeit von den auftretenden mechanischen Spannungen eine Doppelbrechung induziert wird. Um den durch die Doppelbrechung erzeugten Effekt nicht zu verfälschen, ist es erforderlich, wie bereits erwähnt, den Lichtwellenleiter 43 torsionsspannungsfrei auf den elastischen Metallzylinder 44 aufzuwickeln.

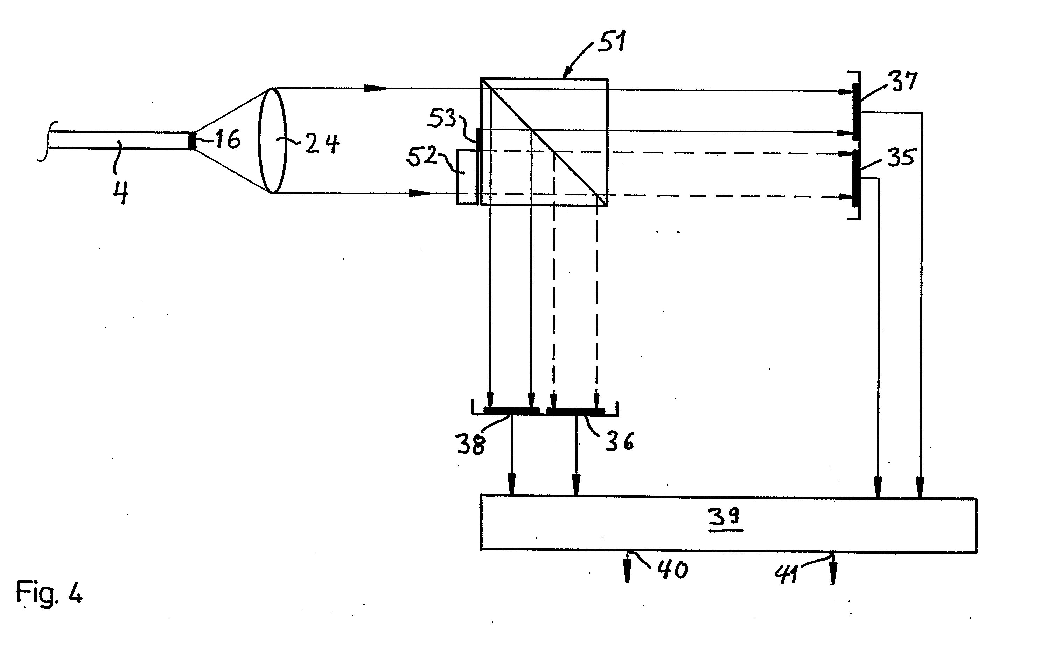

In Fig. 4 ist eine Detektionseinrichtung 50 dargestellt, die sich von der in den Figuren 1 und 2 dargestellten Detektionseinrichtung 18 dadurch unterscheidet, daß die Erzeugung der vier Lichtbündel für die Photodetektoren 35 bis 38 nicht mit Hilfe zweier Wollaston-Prismen 25, 26, sondern mi Hilfe eines polarisierenden Strahlteilerwürfels 51 erfolgt, in dem das von der Sammellinse 24 erzeugte Parallelstrahlbündel teilweise vor dem Eintritt in den polarisierenden Strahlteilerwürfel 51 ein $\lambda/2$-Verzögerungsplatte 52 durchquert, deren Achse um 22,5° zur x-Achse des Faser-Fabry-Perot-Interferometers gedreht ist. Die $\lambda/2$-Verzögerungsplatte 52 teilt den Parallelstrahl in zwei Teilstrahlen E und E' auf. Der polarisierende Strahlteilerwürfel 51 spaltet die beiden Teilstrahlen E und E' jeweils in die x-und y-Komponent $E_x$, $E_y$, $E_x'$ und $E_y'$ der sich längs der Hauptachsen des Fabry-Perot-Interferometers ausbreitenden Welle auf, wobei wiederum vier Intensitäten $I_1$, $I_2$, $I_3$ und $I_4$ auftreten, die die Photodetektoren 35 bis 38 beaufschlagen.

Die Lichteinfallsebene des Strahlteilerwürfels 51, dessen Achsen parallel zu den Hauptachsen des Faser-Fabry-Perot-Interferometers orientiert sind, wird mit einem zu einer Achse des Faser-Fabry-Perot-Interferometers parallel ausgerichteten, etwa 1 mm breiten Maskierungsstreifen 53 in zwei Lichteintrittsflächen unterteilt, wodurch ein Übersprechen der beiden Teilstrahlen E und E' verhindert wird. Die Photodetektoren 35 bis 38 können durch zwei in je zwei Sektoren getrennte Detektorflächen realisiert sein. Je nach dem eingesetzten Detektortyp kann aes erforderlich sein, die auf die Photodetektoren 35 bis 36 fallenden Strahlenbündel zusätzlich mit einer weiteren Linse auf die Detektorflächen der Photodetektoren zu fokussieren. Die Auswertung der Ausgangssignale der Photodetektoren 35 bis 38 erfolgt in der Auswerteelektronik 39 in der gleichen Weise, wie dies bereits im Zusammenhang mit dem Ausführungsbeispiel gemäß Fig. 1 beschrieben worden ist.

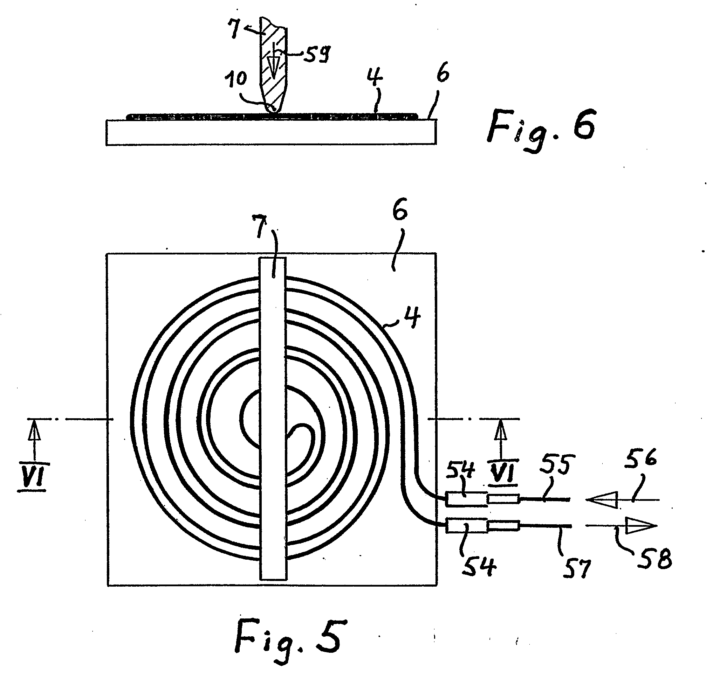

Während bei dem in Fig. 1 dargestellten Ausführungsbeispeil der Druckstempel 7 den Lichtwellenleiter 4 lediglich an einer einzigen Stelle unter Spannung setzt, sind bei den in den Figuren 5 bis 9 dargestellten Ausführungsbeispielen jeweils mehrere Wechselwirkungsbereiche zwischen dem Druckstempel 7 und dem Lichtwellenleiter 4 vorgeshen.

Fig. 5 zeigt eine Auflagefläche 6 mit einem in einer Ebene spiralförmig und bifilar gewickelten Lichtwellenleiter 4. Der schneidenartig ausgebildete Druckstempel 7 überquert die bifilar gewickelte Spirale entlang einem Durchmesser, so daß eine Vielzahl von Wechselwirkungsbereichen gebildet wird, durch die eine höhere Empfindlichkeit erzielt wird. Die Enden des Lichtwellenleiters 4 münden in Lichtwellenleiter-Steckern 54 und sind an ihren in den Lichtwellenleiter-Steckern 54 liegenden Stirnseiten mit teildurchlässigen Spiegeln versehen. Über eine polarisationserhaltenden Faser 55 wird in Richtung des Pfeiles 56 zirular polarisiertes Licht eingekoppelt. Über eine weitere polarisationserhaltende Faser 57 wird in Richtung des Pfeils 58 ein Signal zur Detektionseinrichtung 18 oder 50 ausgekoppelt.

In Fig. 6 ist eine Seitenansicht auf einen Schnitt durch die in Fig. 5 gezeigte Anordnung dargestellt. Fig. 6 veranschaulicht die ebene Auflagefläche 6 mit der ebenen bifilaren Spule, die durch den Lichtwellenleiter 4 gebildet ist. Außerdem erkennt man den in Richtung des Pfeiles 59 gegen den Lichtwellenleiter 4 andrückbaren Druckstempel 7 mit der abgerundeten Kante 10. Die Figuren 5 und 6 zeigen deutlich die -

schneidenartige Ausbildung des Druckstempels 7, der eine geringe Breite und eine verhältnismäßige große Länge aufweist. Die Höhe des Druckstempels 7 richtet sich nach der jeweiligen Anwendung.

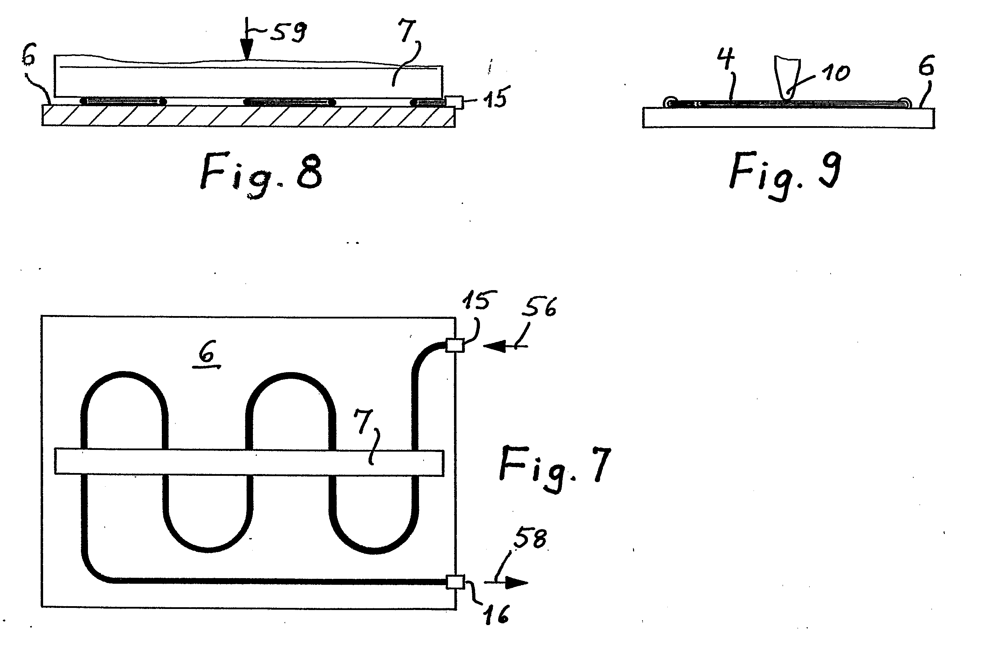

In den Figuren 7 bis 9 ist ein weiteres Ausführungsbeispiel für eine Sensoranordnung veranschaulicht, bei der ebenfalls mehrere Wechselwirkungsbereiche zwischen dem Lichtwellenleiter 4 und dem Druckstempel 7 vorgesehen sind. Wie man in Fig. 7 erkennt, ist der Lichtwellenleiter 4 schlangenförmig, wellenförmig oder mäanderförmig entlang der Auflagefläche 6 verlegt, wobei an den Kreuzungspunkten mit dem Druckstempel 7 zwischen diesem und dem Lichtwellenleiter 4 jeweils ein rechter Winkel gebildet ist.

Fig. 8 zeigt einen Schnitt parallel zur Hauptausdehnungsrichtung des Druckstempels 7 und veranschaulicht insbesondere, daß der Druckstempel 7 infolge der mehrfachen Auflage auf dem Lichtwellenleiter 4 gut geführt ist.

Schließlich zeigt Fig. 9 eine Ansicht von links auf die in Fig. 7 dargestellte Anordnung, wobei wiederum die abgerundete Kante 10 des Druckstempels 7 deutlich zu erkennen ist.

**Ansprüche**

1. Sensoranordnung mit einem faseroptischen Fabry-Perot-Interferometer, das einen monomodig angeregten, mechanisch belasteten Lichtwellenleiter aufweist, der an seinen beiden Stirnflächen jeweils einen teildurchlässigen Spiegel aufweist, wobei die erste Stirnfläche mit dem polarisierten Licht einer Lichtquelle beaufschlagt wird und das aus der zweiten Stirnfläche austretende Licht eine Detektionseinrichtung speist, die mit einer Auswerteelektronik verbunden ist, **dadurch gekennzeichnet** daß die Einspeisung des Lichtes über eine Einrichtung (21, 22) zum Erzeugen einer zirkularen Polarisation erfolgt, daß der Lichtwellenleiter (4) nicht oder nur schwach doppelbrechend ist, wobei die mechanische Belastung die beiden Hauptachsenrichtungen der induzierten Doppelbrechung festlegt, und daß das austretende Licht über eine Strahlteileranordnung (25, 26, 51), die das den beiden Hauptachsenrichtungen zugeordnete polarsierte Licht entsprechend seinen beiden Komponenten zerlegt, vier Photodetektoren (35 bis 38) speist, deren Ausgangssignale an vier Eingänge der Auswerteelektronik (39) angeschlossen sind.

2. Sensoranordnung nach Anspruch 1, **dadurch gekennzeichnet,** daß die Strahlteileranordnung zwei Wollaston-Prismen aufweist, von denen das eine (26) mit seinen Achsen auf die Hauptachsen des Lichtwellenleiters (4) und das andere (25) mit seinen Achsen unter 45° auf die Hauptachsen des Lichtwellenleiters (4) ausgerichtet ist.

3. Sensoranordnung nach Anspruch 2, **dadurch gekennzeichnet,** daß im austretenden Lichtstrahlbündel ein Spiegel (27) zum Auskoppeln eines Teillichtstrahles zu einem der beiden Wollaston-Prismen (26) vorgesehen ist.

4. Sensoranordnung nach Anspruch 1, **dadurch gekennzeichnet,** daß die Strahlteileranordnung einen polarisierenden Strahlteilerwürfel (51), dessen Achsen parallel zu den Hauptachsen des Lichtwellenleiters orientiert sind, sowie eine in einem Teilstrahl zum Strahlteilerwürfel (51) angeordnete λ/2-Verzögerungsplatte aufweist, deren Achse um 22,5° zu einer der Hauptachsen des Lichtwellenleiters (4) gedreht ist.

5. Sensoranordnung nach einem der vorstehenden Ansprüche, **dadurch gekennzeichnet,** daß die Lichtquelle ein Diodenlaser (19) ist und die Einrichtung zum Erzeugen einer zirkularen Polarisation eine Kollimatorlinse (20), einen Polarisator (21), eine λ/4-Platte (22) und eine Sammellinse (23) aufweist, durch die das zirkular polarisierte Licht konstanter Wellenlänge in den Kern des Lichtwellenleiters (4) eingekoppelt wird.

6. Sensoranordnung nach einem der vorstehenden Ansprüche, **dadurch gekennzeichnet,** daß der Lichtwellenleiter (4) zwischen einem Druckstempel (7) und einer Auflagefläche (6) angeordnet ist.

7. Sensoranordnung nach Anspruch 6, **dadurch gekennzeichnet,** daß der Druckstempel (7) eine schneidenartig auf den Lichtwellenleiter (4) einwirkende abgerundete Kante (10) aufweist, die sich rechtwinklig zur Längsrichtung des Lichtwellenleiters (4) erstreckt.

8. Sensoranordnung nach Anspruch 6 oder 7, **dadurch gekennzeichnet,** daß der Lichtwellenleiter (4) als bifilare ebene Spirale gewickelt ist, die an mehreren Stellen mit den sich entlang dem Durchmesser der Spirale erstreckenden Druckstempel (7) in Wechselwirkung steht.

9. Sensoranordnung nach Anspruch 6 oder 7, **dadurch gekennzeichnet,** daß der Lichtwellenleiter (4) auf der Auflagefläche (6) entlang einer Schlangenlinie verlegt ist, die an mehreren Stellen mit dem sich in Fortpflanzungsrichtung der Schlangenlinie erstreckenden Druckstempel (7) in Berührung steht.

10. Sensoranordnung nach einem der Ansprüche 6 bis 9, **dadurch gekennzeichnet,** daß der Lichtwellenleiter (4) und die zugeordnete Auflagefläche (6) in einem Gehäuse (1) angeordnet sind, das mit einer Flüssigkeit oder einem Gas gefüllt ist.

11. Sensoranordnung nach Anspruch 10, **dadurch gekennzeichnet,** daß das Gehäuse (1) mit einem Einlaß (2) und einem Auslaß (3) versehen ist.

12. Sensoranordnung nach einem der Ansprüche 1 bis 5, **dadurch gekennzeichnet,** daß der Lichtwellenleiter (43) torsionsfrei auf einen elastischen hohlen Metallzylinder (44) aufgewickelt ist, dessen Innenraum (47) mit einem unter Druck stehenden Medium verbunden ist.

13. Sensoranordnung nach Anspruch 12, **dadurch gekennzeichnet,** daß der Metallzylinder (44) in einer Flüssigkeit (46) in einem Behälter (45) eingetaucht ist.

14. Sensoranordnung nach Anspruch 13, **dadurch gekennzeichnet,** daß die Flüssigkeit (46) ein Wärmebad bildet.

Fig.1

Fig.2

0 241 766

Fig. 3

0 241 766

Fig. 4

Fig. 6

Fig. 5

Fig. 8

Fig. 9

Fig. 7

0 241 766